# EUROPÄISCHE PATENTANMELDUNG

(11) **EP 0 953 465 A2**
(43) Veröffentlichungstag der Anmeldung: **03.11.1999**
(21) Anmeldenummer: 99108419.5
(22) Anmeldetag: 29.04.1999
(51) Int. Cl.: B60J 7/05

(54) **Führungskulisse**

(30) Priorität: 02.05.1998 DE 19819678
(71) Anmelder: WEBASTO KAROSSERIESYSTEME GmbH, D-82131 Stockdorf (DE)
(72) Erfinder: Staltmayer, Thomas, 82131 Gauting (DE); Wittal, Roland, 80687 München (DE); Schwanitz, Günther, 82362 Weilheim (DE)
(74) Vertreter: Wiese, Gerhard

(57) **Zusammenfassung**

Eine Führungskulisse für einen Deckel (14) eines öffnungsfähigen Fahrzeugdaches umfaßt einen mit dem Deckel (14) verbundenen Kulissenkörper (20), der mindestens einen schlitzförmigen Durchbruch (22) aufweist. Der Durchbruch (22) bildet entweder selbst eine Führungsbahn (23) oder dient der Aufnahme eines die Führungsbahn (23) aufweisenden Führungskörpers (26).

Um die Führungskulisse (18) kostengünstig mit hoher Steifigkeit auszubilden und dennoch mit geringer Materialdicke und schmalen Stegen ober und unterhalb des Durchbruches (22) auszukommen, wird mindestens ein Versteifungselement (48) vorgesehen, welches den Durchbruch (22) zumindest in einem Teilbereich brückenartig überspannt und Materialbereiche des Kulissenkörpers (20) beidseitig des Durchbruches (22) miteinander verbindet.

## Beschreibung

Die Erfindung bezieht sich auf eine Führungskulisse für einen Deckel eines öffnungsfähigen Fahrzeugdaches mit einem mit dem Deckel verbundenen Kulissenkörper, der mindestens einen schlitzförmigen Durchbruch umfaßt, wobei der Durchbruch eine Führungsbahn bildet oder der Aufnahme eines die Führungsbahn aufweisenden Führungskörpers dient.

Eine solche Führungskulisse ist beispielsweise aus der DE 35 29 118 C2 oder der DE 196 23 945 C1 bekannt.

Die Führungsbahn der Führungskulisse dient der verschiebbaren Aufnahme eines Kulissenstifts einer Deckelbetätigungsmechanik zum Verschwenken und/oder Verschieben des Deckels in Fahrzeuglängsrichtung. Damit der Deckel bei vertikalen Belastungen, wie sie unter anderem durch Windlast hervorgerufen werden, nicht zum Schwingen neigt, muß der Kulissenkörper einer gattungsgemäßen Führungskulisse eine ausreichende Steifigkeit und Verdrehfestigkeit besitzen. Auch im Überlastbetrieb, der beispielsweise eintritt, wenn die Deckelbetätigungsmechanik bei an einem fahrzeugfest angeordneten Rahmen festgefrorenem Deckel betätigt wird, darf sich die Kulisse nicht plastisch verformen. Dabei sind insbesondere Führungskulissen mit sehr langen Führungsbahnen kritisch, wie sie bei Deckelbetätigungsmechaniken zum Einsatz kommen, bei denen der Kulissenstift direkt an einem Gleitstück einer in Verschieberichtung des Deckels verlaufenden Führungsschiene angebracht ist. Aber auch der Kulissenköper einer Führungskulisse mit kürzerer Führungsbahn, die typischerweise verwendet wird, wenn der Kulissenstift an einem schwenkbar am Gleitstück der Führungsschiene angeordneten Ausstellhebel angebracht ist, erfährt durch den schlitzförmigen Durchbruch eine nicht unbeträchtliche Schwächung.

Führungskulissen der eingangs genannten Art werden daher häufig als relativ dickes Blechteil ausgeführt, welches zusätzlich Abwinklungen aufweisen kann. Insbesondere müssen ober- und unterhalb des Durchbruches hinreichend hohe Stege verbleiben, um eine plastische Verformung der Führungsbahn unter Last zu vermeiden und die elastische Verformung und Schwingneigung zu minimieren. Dies hat zur Folge, daß gattungsgemäße Führungskulissen, wenn der Kulissenkörper aus einem Blechteil besteht, ein hohes Gewicht besitzen und eine große Einbauhöhe beanspruchen. Wird bei Führungskulissen der eingangs genannten Art der Kulissenköper aus Kunststoff ausgebildet, so muß dieser aus Festigkeitsgründen noch stärker bemessen sein und nimmt noch mehr Einbauraum in Anspruch.

Diese prinzipiellen Nachteile haften auch Kulissen an, deren Kulissenkörper als Verbund ausgebildet ist, der beispielsweise einen schichtartigen Aufbau aus einem innenliegenden Kunststoff- und vorzugsweise zwei seitlichen Metallkörpern aufweist (DE-44 05 742 C1).

Der im Anspruch 1 angegebenen Erfindung liegt die Aufgabe zugrunde, eine Kulisse der eingangs genannten Art zu schaffen, die sich durch eine hohe Festigkeit auszeichnet, dennoch mit geringer Materialdicke und schmalen Stegen ober- und unterhalb des Durchbruches auskommt und sich ohne großen fertigungstechnischen Aufwand kostengünstig herstellen läßt.

Diese Aufgabe wird bei einer Führungskulisse mit den Merkmalen des Oberbegriffs des Anspruchs 1 dadurch gelöst, daß mindestens ein Versteifungselement vorgesehen ist, welches den Durchbruch zumindest in einem Teilbereich brückenartig überspannt und Materialbereiche des Kulissenkörpers beidseitig des Durchbruches miteinander verbindet.

Somit ist es möglich, den Kulissenkörper dünnwandig und mit schmalen Stegen beidseitig des Durchbruches auszuführen. Die Versteifungselemente verstärken den Kulissenkörper, indem sie die freie federnde Länge des Durchbruches reduzieren, und können gezielt an Stellen hoher Belastung angeordnet werden, ohne die Bauhöhe zu vergrößern. Die zuverlässige Funktion der Kulisse wird auch im Überlastbetrieb wesentlich verbessert.

Die erfindungsgemäße Führungskulisse eignet sich zur Verwendung bei allen Arten von öffnungsfähigen Fahrzeugdächern wie Schiebedächern, Hebedächern, Schiebe/Hebedächern oder Lamellendächern. Bei dem Deckel kann es sich um einen einteiligen oder mehrteiligen Deckel handeln.

Vorteilhafte Weiterbildungen der Erfindung sind Gegenstand der Unteransprüche.

Vorzugsweise ist das Versteifungselement U-förmig ausgebildet und mit dem Kulissenkörper form- und/oder kraftschlüssig verbunden. Es kann dabei von einem U-förmig gebogenen Blechstreifen gebildet sein, der mit dem Kulissenkörper verrastet und/oder vernietet ist. Der Blechstreifen kann sich über nahezu die gesamte Länge der Führungsbahn erstrecken.

Das Versteifungselement kann auf konstruktiv besonders einfache Weise auch als U-förmig gebogener Metallköper mit kreisförmigem Querschnitt ausgestaltet sein, der in Aufnahmebohrungen des Kulissenkörpers verstemmt oder vertaumelt ist, wobei der Kulissenkörper zweckmäßig ebenfalls aus Metall besteht.

Das Versteifungselement kann in weiterer Ausgestaltung der Erfindung stoffschlüssig mit dem Kulissenkörper verbunden oder einstückig mit diesem ausgebildet sein. Die einstückige Ausführung bietet sich besonders bei einem Kulissenkörper aus Kunststoff an, bei dem das mindestens eine Versteifungselement beim Spritzvorgang mit angespritzt wird.

Fertigungstechnisch günstig laßt sich das Versteifungselement auch als eine im wesentlichen U-förmige Kunststoffumspritzung des Kulissenkörpers ausbilden, wobei man bei der Formgebung große Freiheiten hat und das Versteifungselement festigkeits- und raumoptimieren kann. Wird die Führungsbahn nicht vom Durchbruch des Kulisserkörpers selbst sondern von einem Führungskörper aus Kunststoff gebildet, der sich im Durchbruch des Kulissenkörpers befindet, bietet es sich an, den Führungskörper und das mindestens eine Versteifungselement einstückig auszubilden und gemeinsam an den Kulissenkörper anzuspritzen.

Besonders vorteilhaft spannt das Versteifungselement die Materialbereiche beidseitig des Durchbruches federnd in Richtung aufeinander vor, so daß auch die Wandungen der Führungsbahn in Querrichtung leicht vorgespannt werden und ein verschiebbar aufgenommener Führungsstift spielfrei an diesen anliegt.

Vorzugsweise überspannen die Versteifungselemente einen Bereich des Durchbruchs des Kulissenkörpers, in dem sich ein Abschnitt der Führungsbahn befindet, der dem Übergang von einer geschlossenen Stellung des Deckels zu einer Lüftungsstellung mit über eine feste Dachhaut des Fahrzeugs angehobener Hinterkante des Deckels entspricht. Weiterhin verstärkt sinnvollerweise ein Versteifungselement den Durchbruch in einem Abschnitt der Führungsbahn, der der Lüftungsstellung entspricht. So wird sichergestellt, daß in Deckelpositionen, bei denen ein Überlastbetrieb häufig auftreten kann, die Führungskulisse besonders steif ausgebildet ist.

Nachfolgend sind vorteilhafte Ausführungsformen der Erfindung anhand der Zeichnungen näher erläutert. Es zeigen:
- Fig. 1: eine schematische Draufsicht auf ein Fahrzeugdach;
- Fig. 2: einen Teilschnitt entlang der Linie II-II der Fig. 1;
- Fig. 3: einen Teilschnitt entlang der Linie III-III der Fig. 2;
- Fig. 4: einen Teilschnitt ähnlich Fig. 3 für ein Versteifungselement gemäß einer abgewandelten Ausführungsform;
- Fign. 5 bis 6: Teilschnitte ähnlich Fig. 3 für weitere Ausführungsformen des Versteifungselements.

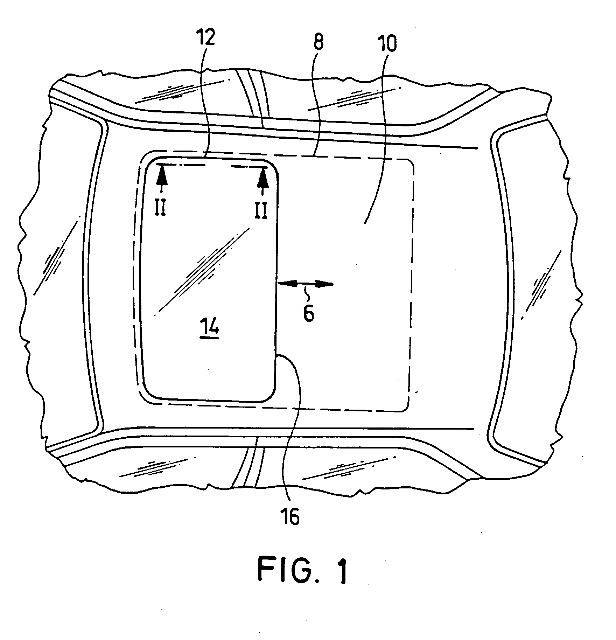

Wie in Fig. 1 dargestellt, ist in einer festen Dachhaut 10 eines Fahrzeugs eine Dachöffnung 12 vorgesehen, die von einem Deckel 14 wahlweise verschlossen bzw. ganz oder teilweise freigelegt werden kann. Der Deckel 14 wird von einer Deckelbetätigungsmechanik bekannter Art angetrieben, die auf einem Rahmen 8 abgestützt ist und einem Anheben oder Absenken einer Hinterkante 16 des Deckels 14 sowie der Deckelverschiebung in Verschieberichtung 6 dient.

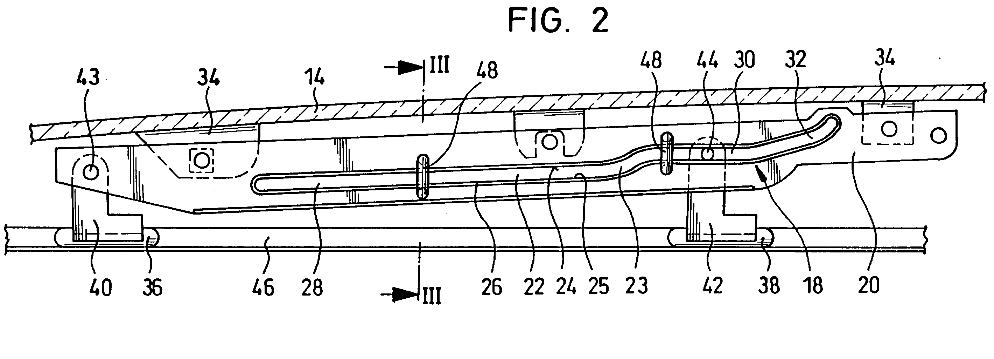

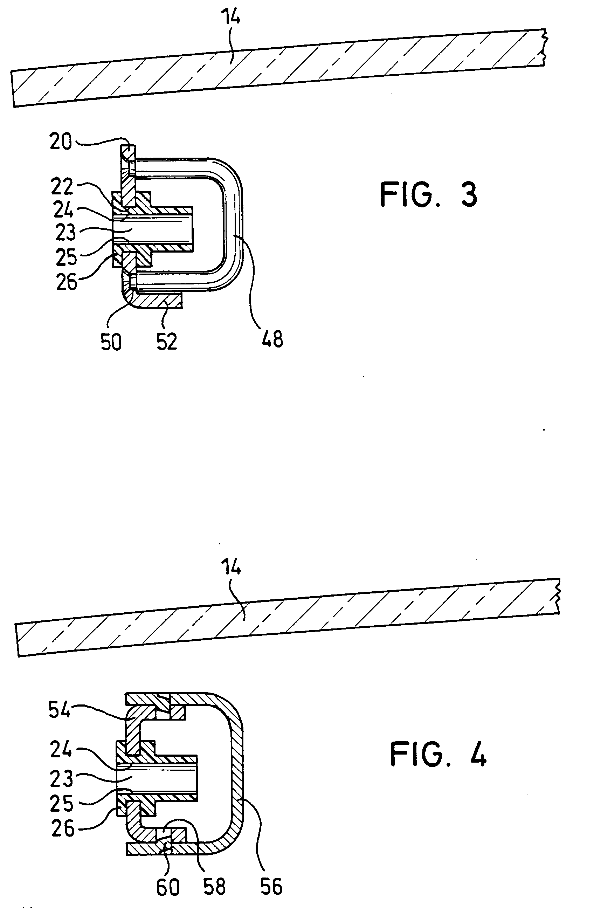

Unter Bezugnahme auf die Fign. 2 und 3 ist eine Führungskulisse 18 gezeigt, die einen langgestreckten Kulissenkörper 20 aus Metall mit einem im wesentlichen in Längsrichtung des Kulissenkörpers verlaufenden schlitzförmigen Durchbruch 22 aufweist. Haltestücke 34 dienen der Befestigung des Kulissenkörpers 20 an dem Deckel 14. In dem Durchbruch 22 des Kulisserkörpers 20 ist ein Kunststoff-Führungskörper 26 angespritzt, der eine Führungsbahn 23 aufweist, welche von einer oberen und einer unteren Wand 24, 25 gebildet wird. Die Wände 24 und 25 verlaufen in einem Abstand, der der Dicke eines zwischen ihnen beweglich geführten Kulissenstifts 44 entspricht. An einem vorderen Ende des Kulissenkörpers ist dieser gelenkig über einen Stift 43 mit einem Steg 40 eines vorderen Gleitstücks 36 verbunden, wobei das Gleitstück 36 in einer in Verschieberichtung 6 des Deckels verlaufenden Führungsschiene 46 verschiebbar aufgenommen ist.

Der Kulissenstift 44 wird von einem Steg 42 eines hinteren Gleitstücks 38 getragen, welches ebenfalls entlang der Führungsschiene 46 verschiebbar gelagert ist. Das hintere Gleitstück 38 ist Teil der Deckelbetätigungsmechanik und wird auf bekannte Weise von einem nicht gezeigten Antrieb über drucksteife Kabel in Verschieberichtung 6 bewegt, wobei der Kulissenstift 44 je nach Abstand der beiden Gleitstücke 36 und 38 entlang der Führungsbann 23 verschoben wird. Hierdurch wird die Längsbewegung des hinteren Gleitstücks 38 in eine rotatorische Bewegung des Deckels 14 um die Längsachse des Stifts 43 transformiert. Befindet sich der Kulissenstift 44 in einem vorderen Abschnitt 28 der Führungsbahn 23, so ist die Deckelhinterkante 16 über die feste Dachhaut 10 ausgestellt. Nimmt der Kulissenstift 44, wie in Fig. 2 dargestellt, einen mittleren Abschnitt 30 der Führungsbahn 23 ein, ist der Deckel 14 in geschlossener Position. Steht der Kulissenstift 44 schließlich in einem hinterem Abschnitt 32, ist die Hinterkante 16 des Deckels 14 unter die feste Dachhaut 10 geschwenkt, so daß der Deckel 14 durch Verschieben beider Gleitstücke 36 und 38 in Verschieberichtung 6 verfahren werden kann.

Der Kulissenkörper 20 hat einen L-förmigen Querschnitt mit einer Abkantung 52 und ist mit zwei Versteifungselementen 48 versehen, die den Durchbruch 22 in Verschieberichtung 6 in drei etwa gleich lange Abschnitte unterteilen und Materialbereiche ober- und unterhalb des Durchbruchs 22 miteinander verbinden. Die Versteifungselemente 48 werden von einem U-förmigen Rundstahl gebildet, dessen Schenkel jeweils endseitig einen Absatz aufweisen, der in eine Bohrung 50 des Kulissenkörpers 20 eingeführt und mit dieser in Form einer Senkkopf-Nietverbindung form- und kraftschlüssig verbunden ist.

Bei dem in Fig. 4 wiedergegebenen Ausführungsbeispiel ist das Versteifungselement als U-förmiger Federbügel 56 ausgebildet, dessen Schenkel einen ebenfalls U-förmigen Kulissenkörper 54 umgreifen. Jeder Schenkel des Federbügels 56 weist gestanzte Rastbügel 60 auf, die in Aufnahmen 58 des Kulissenkörpers 54 formschlüssig eingreifen. Die Schenkel des Federbügels 56 sind in Richtung aufeinander vorgespannt, um ein sicheres Anliegen am Kulissenkörper 54 zu gewährleisten und gleichzeitig die obere und untere Wand 24 bzw. 25 des Führungskörpers 26 geringfügig elastisch zusammerzudrücken, damit der Kulissenstift 44 spielfrei der Führungsbahn 23 folgt.

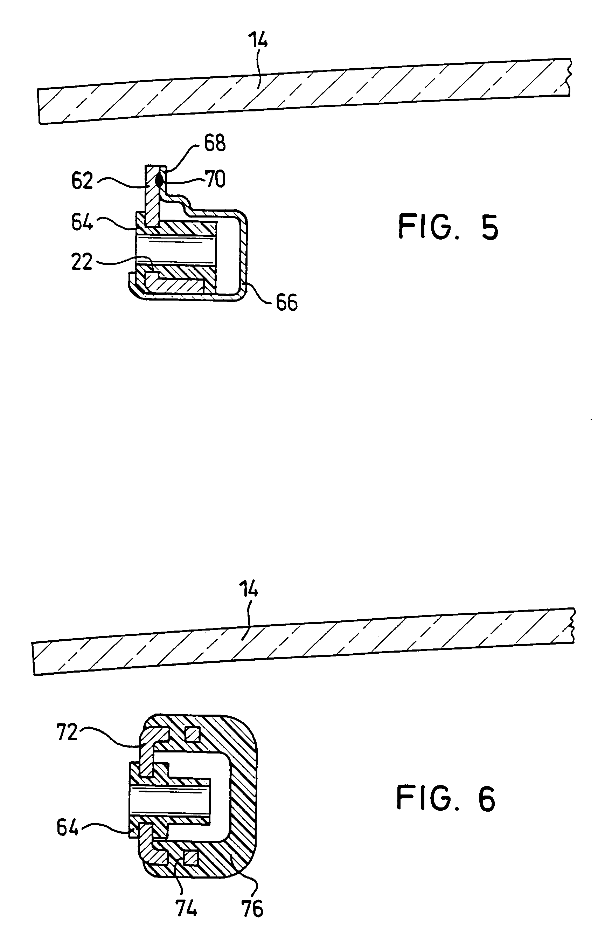

Die Ausführungsform nach Fig. 5 zeigt ein ebenfalls als Federbügel 66 ausgestaltetes im wesentlichen U-förmiges Versteifungselement sowie einen L-förmigen Kulissenkörper 62, in dessen Durchbruch 22 ein Führungsköper 64 aus Kunststoff angespritzt ist. Der untere Schenkel des Federbügels 66 umgreift den kurzen Schenkel des Kulissenkörpers 62 formschlüssig, wohingegen am oberen Schenkel des Federbügels 66 ein Ansatz 68 angeformt ist, der mit dem langen Schenkel des Kulissenkörpers 62 über Schweißpunkte 70 verbunden ist. In Längsrichtung des Kulissenköpers 62 erstreckt sich der Federbügel 66 über nahezu die gesamte Länge der Führungsbahn.

In Fig. 6 ist eine Ausführungsform veranschaulicht, bei der das Versteifungselement eine U-förmige Kunststoffumspritzung 76 ist, die einen oberen und einen unteren Schenkel eines gleichfalls U-förmigen Kulissenkörpers 72 verbindet. Durchlässe 74 in den Schenkeln des Kulisserkörper 72 dienen der formschlüssigen Verbindung der Kunststoffumpritzung 76 mit dem Kulissenkörper 72. Der Führungskörper 64 kann dabei als getrenntes Bauteil ausgebildet sein oder optional mit der Kunststoffumspritzung 76 einstückig hergestellt werden.

### Bezugszeichenliste

- 6: Verschieberichtung von 14
- 8: Rahmen
- 10: feste Dachhaut
- 12: Dachöffnung
- 14: Deckel
- 16: Hinterkante von 14
- 18: Führungskulisse
- 20: Kulissenkörper
- 22: Durchbruch
- 23: Führungsbahn
- 24: obere Wand
- 25: untere Wand
- 26: Führungskörper
- 28, 30, 32: Abschnitte von 23
- 34: Haltestück
- 36: vorderes Gleitstück
- 38: hinteres Gleitstück
- 40, 42: Steg von 36 bzw. 38
- 43: Stift
- 44: Kulissenstift
- 46: Führungsschiene
- 48: Versteifungselement
- 50: Bohrung
- 52: Abkantung von 20
- 54: Kulissenkörper
- 56: Federbügel
- 58: Aufnahme
- 60: Rastbügel
- 62: Kulissenkörper
- 64: Führungskörper
- 66: Federbügel
- 68: Ansatz
- 70: Schweißpunkt
- 72: Kulissenkörper
- 74: Durchlaß
- 76: Kunststoffumspritzung

## Patentansprüche

1. Führungskulisse für einen Deckel (14) eines öffnungsfähigen Fahrzeugdaches mit einem mit dem Deckel (14) verbundenen Kulissenkörper (20, 54, 62, 72), der mindestens einen schlitzförmigen Durchbruch (22) umfaßt, wobei der Durchbruch (22) eine Führungsbahn (23) bildet oder der Aufnahme eines die Führungsbahn (23) aufweisenden Führungskörpers (26, 64) dient, **dadurch gekennzeichnet**, daß mindestens ein Versteifungselement (48, 56, 66, 76) vorgesehen ist, welches den Durchbruch (22) zumindest in einem Teilbereich brückenartig überspannt und Materialbereiche des Kulissenkörpers (20, 54, 62, 72) beidseitig des Durchbruches (22) miteinander verbindet.

2. Führungskulisse nach Anspruch 1, **dadurch gekennzeichnet**, daß das Versteifungselement (48, 56, 66, 76) U-förmig ausgebildet ist.

3. Führungskulisse nach Anspruch 1 oder 2, **dadurch gekennzeichnet**, daß das Versteifungselement (48, 56, 66, 76) mit dem Kulissenkörper (20, 54, 62, 72) form- und/oder kraftschlüssig verbunden ist.

4. Führungskulisse nach Anspruch 1 oder 2, **dadurch gekennzeichnet**, daß das Versteifungselement (48, 56, 66, 76) mit dem Kulisserkörper (20, 54, 62, 72) stoffschlüssig verbunden ist.

5. Führungskulisse nach einem der vorhergehenden Ansprüche, **dadurch gekennzeichnet**, daß das Versteifungselement (48, 56, 66, 76) mit dem Kulissenkörper (20, 54, 62, 72) einstückig ausgebildet ist.

6. Führungskulisse nach einem der vorhergehenden Ansprüche, **dadurch gekennzeichnet**, daß das Versteifungselement (48, 56, 66, 76) die Materialbereiche beidseitig des Durchbruches (22) federnd in Richtung aufeinander vorspannt.

7. Führungskulisse nach einem der vorhergehenden Ansprüche, **dadurch gekennzeichnet**, daß der Kulissenkörper (20, 54, 62, 72) als Blechteil ausgebildet ist.

8. Führungskulisse nach einem der vorhergehenden Ansprüche, **dadurch gekennzeichnet**, daß mindestens ein Versteifungselement (48, 56, 66, 76) einen Bereich des Durchbruchs (22) überspannt, in dem sich ein Abschnitt der Führungsbahn (23) befindet, der dem Übergang von einer geschlossenen Stellung des Deckels 14 zu einer Lüftungsstellung mit über eine feste Dachhaut (10) des Fahrzeugs angehobener Hinterkante (16) des Deckels (14) entspricht.

9. Führungskulisse nach einem der vorhergehenden Ansprüche, **dadurch gekennzeichnet**, daß mindestens ein Versteifungselement (48, 56, 66, 76) vorgesehen ist, welches den Durchbruch (22) in einem Abschnitt (28) der Führungsbahn verstärkt, der der Lüftungsstellung entspricht.

10. Führungskulisse nach einem der vorhergehenden Ansprüche, **dadurch gekennzeichnet**, daß das Versteifungselement von einem U-förmig gebogenen Blechstreifen (56, 66) oder einem U-förmig gebogenen Metallköper mit kreisförmigem Querschnitt (48) gebildet wird.

11. Führungskulisse nach einem der Ansprüche 1 bis 9, **dadurch gekennzeichnet**, daß das Versteifungselement von einer im wesentlichen U-förmigen Kunststoffümspritzung (76) des Kulissenkörpers (72) gebildet wird.
